# EUROPÄISCHE PATENTSCHRIFT

(11) **EP 3 146 833 B1**
(45) Veröffentlichungstag und Bekanntmachung des Hinweises auf die Patenterteilung: **12.06.2019**
(21) Anmeldenummer: 16176869.2
(22) Anmeldetag: 29.06.2016
(51) Int. Cl.: A01D 69/06

(54) **LANDWIRTSCHAFTLICHE ARBEITSMASCHINE**
AGRICULTURAL WORK MACHINE
MACHINE AGRICOLE

(30) Priorität: 28.09.2015 DE 102015116330; 07.12.2015 DE 102015121209
(43) Veröffentlichungstag der Anmeldung: 29.03.2017
(73) Patentinhaber: CLAAS Selbstfahrende Erntemaschinen GmbH, 33428 Harsewinkel (DE)
(72) Erfinder: Dempki, Michael, 59302 Oelde (DE); Hugenberg, Ansgar, 49451 Holdorf (DE)
(74) Vertreter: CLAAS Gruppe

(56) Entgegenhaltungen:
- EP-A1- 1 397 954
- EP-A2- 2 223 588
- DE-A1- 19 634 619
- US-A- 4 130 980

## Beschreibung

Die vorliegende Erfindung betrifft eine landwirtschaftliche Arbeitsmaschine gemäß dem Oberbegriff von Anspruch 1.

Bei der in Rede stehenden landwirtschaftlichen Arbeitsmaschine kann es sich um jedwede landwirtschaftliche Arbeitsmaschine handeln, die mit einer Maschinensteuerung und mindestens einem Riementrieb zur Übertragung von Antriebskraft ausgestattet ist. Dazu gehören beispielsweise Zugmaschinen, insbesondere Traktoren, selbstfahrende Erntemaschinen, insbesondere Feldhäcksler, Mähdrescher o. dgl. Weiter sind von diesem Begriff nicht selbstfahrende Anbaugeräte sowie die Kombination der jeweiligen Zugmaschine mit dem Anbaugerät umfasst.

Die landwirtschaftliche Arbeitsmaschine (GB 911,361 A), von der die Erfindung ausgeht, ist mit einer Antriebsanordnung und mehreren der Antriebsanordnung antriebstechnisch nachgeschalteten Arbeitsorganen wie einem Fahrantrieb, einem Schrägförderer oder einer Dreschtrommel eines Mähdreschers ausgestattet. Die antriebstechnische Kopplung zwischen der Antriebsanordnung und den Arbeitsorganen ist zumindest zum Teil über Riementriebe vorgesehen. Bei der bekannten Arbeitsmaschine ist dem Schrägförderer eine Überwachungseinrichtung zugeordnet die basierend auf der Auslenkung eines Trägers des Schrägförderers das durchlaufende Erntegut erfasst. Basierend auf dieser Erfassung steuert die Maschinensteuerung den Fahrantrieb an. Diese Lösung zur Überwachung des betreffenden Arbeitsorgans, die grundsätzlich auch einen Aufschluß über die mittels des Riementriebs übertragene Antriebsleistung gibt, ist konstruktiv aufwendig und speziell auf das betreffende Arbeitsorgan zugeschnitten, so dass der resultierende Kostenaufwand vergleichsweise hoch ist.

Es ist auch im Rahmen einer theoretischen Untersuchung bekannt geworden, ein über einen singulären Riementrieb übermitteltes Drehmoment über die Auslenkung eines Riemenspanners zu erfassen (DD 1586 74 A).

Die Druckschrift US 4,130,980A offenbart ein Steuersystem zur selbsttätigen Regelung der Fahrgeschwindigkeit selbstfahrender Mähdrescher in Abhängigkeit von Belastungsänderungen an mindestens einer der vom aufgenommenen Erntegut beaufschlagten Schneid-, Förder-, Dresch- oder Trennvorrichtungen, bei dem ein Teil der zur Regelung verwendeten Eingangsgrößen mittels an den zugeordneten Riemen- oder Kettentrieben federnd anliegenden Tastvorrichtungen gewonnen wird.

Der Erfindung liegt das Problem zugrunde, die bekannte landwirtschaftliche Arbeitsmaschine derart auszugestalten und weiterzubilden, dass deren Ansteuerung und/oder Überwachung insbesondere unter Berücksichtigung der übertragenen mechanischen Antriebsleistung mit einfachen Mitteln optimiert wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass sich auch komplexe Arbeitsmaschinen mit einer Mehrzahl von Riementrieben auf konstruktiv einfache und kostengünstige Weise ansteuern und/oder überwachen lassen, indem die Maschinensteuerung während des Arbeitsbetriebs mit einem Riemendehnungssignal des betreffenden Antriebsriemens versorgt wird. Dabei ist weiter erkannt worden, dass sich aus diesem dynamischen Riemendehnungssignal, das auf die lastabhängige Dehnung des jeweiligen Antriebsriemens zurückgeht, leicht auf die abgegebene und/oder aufgenommene Antriebsleistung geschlossen werden kann. Bei entsprechender Auslegung des Antriebsriemens kann bei konstanter Antriebsdrehzahl und bei Vernachlässigung von Verlusten wie Schlupf, Reibung o. dgl. von einer Proportionalität zwischen der dynamischen Riemendehnung und der abgegebenen bzw. aufgenommenen Antriebsleistung gesprochen werden, was die Auswertung besonders einfach gestaltet.

Im Einzelnen weist der betreffende Riementrieb zunächst einen sich je nach Riemendehnung auslenkenden Riemenspanner mit einem Riemendehnungssensor auf. Zur Erzeugung eines Riemendehnungssignals ermittelt der Riemendehnungssensor die Auslenkung des Riemenspanners. Die Maschinensteuerung übernimmt dann die Ansteuerung und/oder Überwachung der Arbeitsmaschine während des Arbeitsbetriebs basierend auf dem mindestens einen Riemendehnungssignal und einem dem Riementrieb zugeordneten Kennwertsatz. Der Kennwertsatz trägt der Tatsache Rechnung, dass die mechanischen Eigenschaften des jeweiligen Antriebsriemens je nach dessen Auslegung unterschiedlich sind, was die Maschinensteuerung bei der Ansteuerung bzw. Überwachung der Arbeitsmaschine berücksichtigen muss.

Es darf darauf hingewiesen werden, dass vorliegend das dynamische Riemendehnungssignal im Vordergrund steht, das sich während des Arbeitsbetriebs der Arbeitsmaschine ergibt. Das dynamische Riemendehnungssignal ergibt sich aus der über den Antriebsriemen übertragenen Antriebskraft, die über das E-Modul des Antriebsriemens zu einer entsprechenden Dehnung führt.

Bei allen Ausführungen zu der vorschlagsgemäßen Lösung darf ferner darauf hingewiesen werden, dass mechanische Verluste wie Reibung und Schlupf vorliegend unberücksichtigt bleiben. Die Maschinensteuerung kann solche Verluste ggf. über entsprechende Korrekturfaktoren berücksichtigen.

Weiter ist zu berücksichtigen, dass der Riemenspanner passiv ausgestaltet sein kann und dann in der Regel über eine Federanordnung auf den Antriebsriemen federvorgespannt ist. Alternativ kann der Riemenspanner aber auch aktiv ausgestaltet sein und, ggf. zusätzlich zu einer Federanordnung, mit einem Antrieb auf den Antriebsriemen einwirken. In einem solchen Fall ist wiederum zu berücksichtigen, dass eine gewisse Riemendehnung auch auf den Antrieb des Riemenspanners zurückgehen kann, was beispielsweise über weitere Korrekturfaktoren berücksichtigt werden kann.

Um den jeweiligen Kennwertsatz auf die tatsächlich an der Arbeitsmaschine vorherrschenden Gegebenheiten anzupassen, sieht die Erfindung eine Kalibrierung der Riemendehnungssensoren vor. Dabei geht es in erster Linie um die Ermittlung oder Anpassung des Zusammenhangs zwischen der Auslenkung des Riemenspanners und der übertragenen Antriebskraft und/oder der übertragenen Antriebsleistung. Die Notwendigkeit einer solchen Kalibrierung ergibt sich einerseits dadurch, dass jeder Antriebsriemen ein gewisses Einlaufverhalten aufweist, in dem sich eine gewisse plastische Dehnung einstellt. Eine weitere plastische Dehnung tritt in einer späteren Lebenszyklusphase des Antriebsriemens auf, die in erster Linie auf einen Verschleiß des Antriebsriemens zurückgeht.

Die antriebstechnische Kopplung zwischen der Antriebsanordnung und einem Arbeitsorgan kann über einen Riementrieb oder über mehrere antriebstechnisch hintereinander geschaltete Riementriebe vorgesehen sein. Ferner können sich von der Antriebsanordnung mehrere Riementriebe in parallelen Antriebssträngen abzweigen. Hier zeigt sich die Skalierbarkeit der vorschlagsgemäßen Lösung, indem ein und dasselbe Messprinzip, nämlich die Ermittlung der dynamischen Riemendehnung, nahezu unverändert an unterschiedlichen Riementrieben umsetzbar ist, ohne dass die Messanordnung verändert werden muss. Dies ist Gegenstand der bevorzugten Ausgestaltung von Anspruch 2.

In einer besonders bevorzugten Variante von Anspruch 3 ist der Riemendehnungssensor als Winkelsensor ausgestaltet, der einer Schwinge des Riemenspanners zugeordnet ist. An einer solchen Schwinge des Riemenspanners befindet sich vorzugsweise eine Spannrolle, die auf dem Antriebsriemen abrollt. Ein solcher Winkelsensor lässt sich auf besonders einfache Weise an dem jeweiligen Riemenspanner anbringen. Insbesondere ist hier eine einfache Nachrüstung bei bestehenden landwirtschaftlichen Arbeitsmaschinen möglich.

Die Verwendung des Riemendehnungssignals durch die Maschinensteuerung kann auf ganz unterschiedliche Weisen erfolgen. Gemäß Anspruch 4 kann es vorteilhaft sein, aus dem Riemendehnungssignal und dem Kennwertsatz die übertragene Antriebskraft oder die übertragene Antriebsleistung zu erzeugen. Denkbar ist aber auch, dass aus dem Riemendehnungssignal und dem Kennwertsatz lediglich ein theoretischer Vergleichswert erzeugt wird, aus dem sich die Leistungsaufnahmen der unterschiedlichen Arbeitsorgane vergleichen lassen.

Bei der besonders bevorzugten Ausgestaltung gemäß Anspruch 5 nutzt die Maschinensteuerung das Riemendehnungssignal zur Umsetzung einer vom Benutzer auswählbaren Betriebsstrategie. Bei der Betriebsstrategie kann es sich beispielsweise um die Vorgabe handeln, die Leistungsaufnahme eines bestimmten Arbeitsorgans möglichst gering zu halten.

Besonders vorteilhaft ist die vorschlagsgemäße Lösung bei einer Arbeitsmaschine mit mehreren, also mindestens zwei, Riementrieben. Gemäß Anspruch 6 ist erkannt worden, dass basierend auf den entsprechend mehreren Riemendehnungssignalen die Verteilung der Antriebsleistung der Antriebsanordnung auf die riemengetriebenen Arbeitsorgane oder auf Gruppen solcher riemengetriebener Arbeitsorgane ohne weiteres ermittelbar ist. Auch hier lässt sich eine oben angesprochene Betriebsstrategie, die beispielsweise eine vorbestimmte Verteilung der Antriebsleistung betrifft, mit einfachen Mitteln umsetzen.

Die weiter bevorzugten Ausgestaltungen gemäß den Ansprüchen 7 bis 10 betreffen die Überwachung der Arbeitsmaschine basierend auf dem vorschlagsgemäßen Riemendehnungssignal. Eine Erhöhung der Maschinenstandzeit lässt sich bei der Ausgabe einer Verschleißinformation gemäß Anspruch 7 oder einer Wartungsmeldung gemäß Anspruch 9 auf unkomplizierte Weise erhöhen.

Bei der weiter bevorzugten Ausgestaltung gemäß Anspruch 11 schließlich ist eine Notfunktion realisiert derart, dass die Maschinensteuerung die Antriebsanordnung bei einer Maximaldehnung abschaltet, der ein Reißen des Antriebsriemens regelmäßig vorausgeht. Alternativ oder zusätzlich kann das tatsächliche Reißen des Antriebsriemens, das sich in einer Maximalauslenkung des Riemenspanners äußert, zur Abschaltung der Antriebsanordnung führen. Mit beiden Realisierungsmöglichkeiten wird verhindert, dass die Arbeitsmaschine durch das Reißen eines Antriebsriemens Schaden nimmt.

Im Folgenden wird die Erfindung anhand einer lediglich ein Ausführungsbeispiel darstellenden Zeichnung erläutert. In der Zeichnung zeigt
- Fig. 1: eine vorschlagsgemäße landwirtschaftliche Arbeitsmaschine mit einem vorschlagsgemäßen Riemendehnungssensor und
- Fig. 2: eine vorschlagsgemäße landwirtschaftliche Arbeitsmaschine mit einem vorschlagsgemäßen Riemendehnungssensor in einer weiteren Ausführungsform.

Wie im einleitenden Teil der Beschreibung erläutert, ist der Begriff "landwirtschaftliche Arbeitsmaschine" umfassend zu verstehen. Im dargestellten Ausführungsbeispiel handelt es sich bei der vorschlagsgemäßen, landwirtschaftlichen Arbeitsmaschine 1 um einen Feldhäcksler. Alle Ausführungen zu dem Feldhäcksler gelten für alle anderen Arten von landwirtschaftlichen Arbeitsmaschinen, insbesondere für einen Mähdrescher, entsprechend.

Die landwirtschaftliche Arbeitsmaschine 1 ist mit einer Maschinensteuerung 2 ausgestattet, die die Ansteuerung und/oder Überwachung der Arbeitsmaschine 1 übernimmt. Die Arbeitsmaschine 1 ist ferner mit Arbeitsorganen 3-6 ausgestattet, die von einer Antriebsanordnung 7 angetrieben werden. Als Arbeitsorgan weist die Arbeitsmaschine 1 hier zunächst eine Vorpresseinheit 3 auf, die als Zuführeinrichtung für das Erntegut fungiert. Die Vorpresseinheit 3 ist mit zwei Paaren von einen Presskanal 3a ausbildenden Vorpresswalzen 3b-e ausgestattet. Dabei übernehmen die vorderen Vorpresswalzen 3b, 3c eine Vorverdichtung des aufgenommenen Ernteguts, während die hinteren Vorpresswalzen 3d, 3e eine gleichmäßige Verdichtung und einen Weitertransport des Ernteguts übernehmen.

Für das Häckseln des aufgenommenen Ernteguts weist die Arbeitsmaschine 1 als weiteres Arbeitsorgan ein Häckselwerk 4 auf, an das sich als wiederum weiteres Arbeitsorgan eine Fördervorrichtung 5 für den Transport des gehäckselten Ernteguts in einen Auswurfkanal 8 anschließt. Das Häckselwerk 9 weist eine Messertrommel 9a auf.

Die vorschlagsgemäße Arbeitsmaschine 1 ist ferner mit einem Fahrantrieb 6 als weiteres Arbeitsorgan ausgestattet, bei dem es sich hier und vorzugsweise um einen hydraulischen Antrieb handelt.

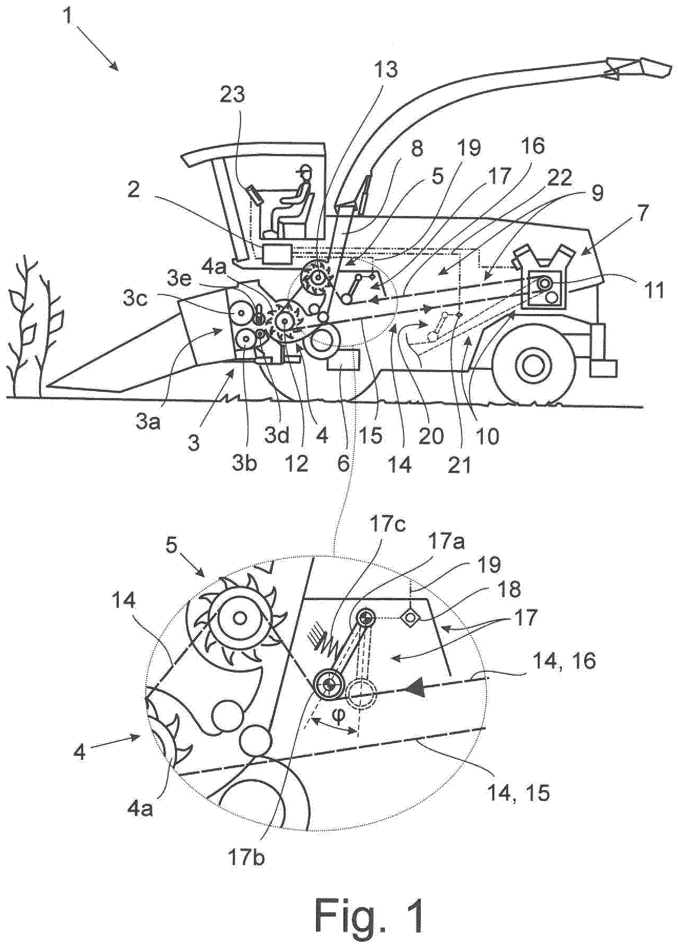

Die Antriebsanordnung 7 ist über mindestens einen Riementrieb 9, 10 mit mindestens einem Arbeitsorgan 3-6 antriebstechnisch gekoppelt. In der Zeichnung sind für eine gute Übersichtlichkeit lediglich zwei Riementriebe 9, 10 dargestellt. Der Riementrieb 9 dient der antriebstechnischen Kopplung der Antriebsanordnung 7 mit der Messertrommel 4a und der Fördervorrichtung 5. Der weitere Riementrieb 10, der in Fig. 1 lediglich angedeutet ist, dient der antriebstechnischen Kopplung der Antriebsanordnung 7 mit dem Fahrantrieb 6 bzw. mit einem dazugehörigen hydraulischen Pumpensystem. Andere Riementriebe sind hier denkbar, beispielsweise für den Antrieb der Vorpresseinheit o. dgl..

Im Folgenden ist, wiederum im Sinne einer guten Übersichtlichkeit, fast durchweg von einem einzigen Riementrieb 9 die Rede. Alle Ausführungen gelten für alle weiteren, eventuell vorgesehenen Riementriebe entsprechend. Der Riementrieb 9 weist eine Antriebsrolle 11, hier und vorzugsweise mehrere Abtriebsrollen 12, 13 und einen Antriebsriemen 14 auf. Dabei stellt der in Fig. 1 untere Abschnitt des Antriebsriemens 14 das Zugtrum 15 und der obere Abschnitt des Antriebsriemens 14 das Lostrum 16 dar. Die Betriebsrichtung des Antriebsriemens 14 ist in der Zeichnung durch Pfeile dargestellt.

Der Detaildarstellung gemäß Fig. 1 lässt sich entnehmen, dass der Riementrieb 9 einen sich je nach Riemendehnung auslenkenden Riemenspanner 17 mit einem Riemendehnungssensor 18 aufweist, der zur Erzeugung eines Riemendehnungssignals 19 die Auslenkung des Riemenspanners 17 ermittelt. In Fig. 1 lediglich angedeutet ist, dass der weitere Riementrieb 10 ebenfalls einen Riemenspanner 20 mit entsprechendem Riemendehnungssensor 21 aufweist, der zur Erzeugung eines Riemendehnungssignals 22 die Auslenkung des Riemenspanners 20 ermittelt.

Vorschlagsgemäß ist es nun so, dass die Maschinensteuerung 2 die Arbeitsmaschine 1 während des Arbeitsbetriebs basierend auf dem Riemendehnungssignal 19 und einem dem Riementrieb 9 zugeordneten Kennwertsatz ansteuert und/oder überwacht. Auch hier darf darauf hingewiesen werden, dass alle Ausführungen zu dem Riemendehnungssignal 19 auf das Riemendehnungssignal 22 anwendbar sind.

Bereits aus der Darstellung gemäß Fig. 1 ergibt sich, dass sich die vorschlagsgemäße Lösung nahezu auf jedes Arbeitsorgan 3-6 oder jede Gruppe von Arbeitsorganen 3-6 anwenden lässt, das bzw. die über einen Riementrieb 9 angetrieben wird. In besonders bevorzugter Ausgestaltung finden für alle Riementriebe 9, 10 identische Riemenspanner 17, 20 mit identischen Riemendehnungssensoren 18, 21 Anwendung, was eine kostengünstige Ansteuerung bzw. Überwachung auch komplexer Arbeitsmaschinen 1 ermöglicht.

Entsprechend ist es vorzugsweise so, dass die Antriebsanordnung 7 über mindestens zwei Riementriebe 9, 10 mit Arbeitsorganen 3-6 entsprechend antriebstechnisch gekoppelt ist, indem für jeden Riementrieb ein entsprechendes Riemendehnungssignal 19 erzeugt werden kann.

Für die Auswertung des Riemendehnungssignals 19 steht der Maschinensteuerung 2 der oben angesprochene Kennwertsatz zur Verfügung, der vorzugsweise eine Information zum Dehnungsverhalten des betreffenden Antriebsriemens 14, hier und vorzugsweise ein E-Modul (Elastizitätsmodul) des betreffenden Antriebsriemens 14, umfasst. Alternativ oder zusätzlich kann es vorgesehen sein, dass der Kennwertsatz einen Zusammenhang zwischen der Auslenkung des Riemenspanners 17 und der über den Antriebsriemen 14 übertragenen Antriebskraft umfasst. In diesem Zusammenhang darf darauf hingewiesen werden, dass mit der Antriebskraft stets ein entsprechendes Antriebs-Drehmoment an der entsprechenden Rolle des Riementriebs 9 einhergeht, das aber abhängig von der Geometrie der betreffenden Rolle ist, so dass zur Vereinfachung vorliegend stets von der über den Antriebsriemen 14 übertragenen Antriebskraft die Rede ist.

Der Begriff "Kennwertsatz" ist vorliegend weit zu verstehen. Er kann grundsätzlich auch nur einen einzigen Proportionalitätsfaktor, beispielsweise einen Proportionalitätsfaktor für den Zusammenhang zwischen der Auslenkung des Riemenspanners 17 und der über den Antriebsriemen 14 übertragenen Antriebskraft, umfassen. Denkbar ist auch, dass der Kennwertsatz eine Vielzahl von Parametern umfasst, wie weiter unten erläutert wird.

Für die Realisierung des Riemenspanners 17 sind zahlreiche vorteilhafte Varianten denkbar. Vorzugsweise weist der Riemenspanner 17 eine Auslenkkomponente, hier eine Schwinge 17a, auf, an der eine Spannrolle 17b angeordnet ist. Die Spannrolle 17b wird über eine Federanordnung 17c auf den Antriebsriemen 14 gedrückt, so dass die Spannrolle 17b auf dem Antriebsriemen 14 abrollt.

Eine obige Ausgestaltung des Riemenspanners 17 mit der Auslenkkomponente 17a ermöglicht eine einfache und robuste sensorische Erfassung der Auslenkung des Riemenspanners 17. Hier und vorzugsweise ist der Riemendehnungssensor 18 als Wegsensor, hier und vorzugsweise als Winkelsensor, ausgestaltet, der der Auslenkkomponente, hier der Schwinge 17a, des Riemenspanners 17 zugeordnet ist. Im einfachsten Fall ist der Riemendehnungssensor 18 als Potentiometer ausgestaltet, das mit der Auslenkkomponente, hier der Schwinge 17a, deren Auslenkung ermittelnd, gekoppelt ist.

In diesem Zusammenhang darf darauf hingewiesen werden, dass der Riemenspanner 17 auch anders als oben erläutert aufgebaut sein kann. Denkbar ist beispielsweise, dass der Riemenspanner 17 zwei oder mehr als zwei Spannrollen 17b aufweist, die an einer entsprechenden Verstellkinematik angelenkt sind.

In Abhängigkeit von der Steuer- bzw. Überwachungsstrategie der Maschinensteuerung 2 kann es vorteilhaft sein, dass die Maschinensteuerung 2 aus dem Riemendehnungssignal 19 und dem Kennwertsatz die übertragene Antriebskraft ermittelt. Alternativ oder zusätzlich kann es vorteilhaft sein, dass die Maschinensteuerung 2 aus dem Riemendehnungssignal 19 und der Riemengeschwindigkeit, insbesondere der Drehzahl und der Geometrie der Antriebsscheibe des Riementriebs, die jeweils übertragene Antriebsleistung ermittelt. Dies trägt dem Umstand Rechnung, dass die übertragene Antriebskraft und, bei konstanter Drehzahl der Antriebsscheibe, auch die übertragene Antriebsleistung, in einem linearen Zusammenhang zu der Dehnung des Antriebsriemens 14 steht, sofern man unterstellt, dass die Dehnung des Antriebsriemens 14 zumindest über den betreffenden Betriebsbereich mit einem konstanten E-Modul beschrieben werden kann.

Bei der obigen, vereinfachten Darstellung werden die an dem Riementrieb 9 auftretenden Verluste, insbesondere Schlupf- und Reibungsverluste, zunächst vernachlässigt.

Wie im allgemeinen Teil der Beschreibung erläutert worden ist, verändert sich während des Lebenszyklus des Riementriebs 9 der Zusammenhang zwischen der Auslenkung des Riemenspanners 17 und der übertragenen Antriebskraft bzw. der übertragenen Antriebsleistung, da sich zumindest während einer Einlaufphase eine "erlaubte" plastische Dehnung des Antriebsriemens 14 ergibt. Entsprechend nimmt die Maschinensteuerung 2, vorzugsweise regelmäßig, einen Kalibriervorgang des Kennwertsatzes, insbesondere des Zusammenhangs zwischen der Auslenkung des Riemenspanners 17 und der übertragenen Antriebskraft bzw. der übertragenen Antriebsleistung, vor. Dabei kann im Rahmen des Kalibriervorgangs die Ermittlung des Kennwertsatzes oder die Anpassung eines bestehenden Kennwertsatzes vorgesehen sein.

Eine besonders einfache Kalibrierung ergibt sich dadurch, dass die Maschinensteuerung 2 die Arbeitsmaschine 1 im Rahmen des Kalibriervorgangs in einem vordefinierten Kalibrier-Lastzustand des Riementriebs 9 betreibt und den Kennwertsatz aus dem im Kalibrier-Lastzustand ermittelten Riemendehnungssignal 19 ermittelt oder an das im Kalibrier-Lastzustand ermittelte Riemendehnungssignal 19 anpasst. Der Kalibrier-Lastzustand ist vorzugsweise dadurch definiert, dass mindestens ein im Leerlauf befindliches Arbeitsorgan 3-6 bei vorbestimmter Drehzahl bzw. Antriebsleistung der Antriebsanordnung 7 angetrieben wird. Beispielsweise ist es denkbar, dass vor dem Einfahren in den Feldbestand die Antriebsanordnung 7 mit maximaler Drehzahl betrieben wird, während sich die betreffenden Arbeitsorgane 3-6 noch im Leerlauf, also frei von Erntegut, befinden. Ein solcher Kalibriervorgang kann vorteilhafterweise nach einem Wendevorgang im Vorgewendebereich eines Feldes erfolgen, bevor die Arbeitsmaschine 1 in den Feldbestand einfährt.

Die Maschinensteuerung 2 dient vorzugsweise der Einstellung von Maschinenparametern der Antriebsanordnung 7 sowie von Maschinenparametern der Arbeitsorgane 3-6, um eine vom Benutzer ausgewählte Betriebsstrategie umzusetzen. Wie weiter oben angedeutet, kann beispielsweise die Betriebsstrategie speziell die Aufnahme von Antriebsleistung durch die Arbeitsorgane 3-6 und insbesondere die Verteilung der Antriebsleistung auf die Arbeitsorgane 3-6 umfassen. Hierfür ist in der Maschinensteuerung 2 vorzugsweise mindestens eine auswählbare Betriebsstrategie gespeichert, wobei die Maschinensteuerung 2 die Arbeitsmaschine 1, hier und vorzugsweise die Antriebsanordnung 7 und/oder mindestens ein Arbeitsorgan 3-6, basierend auf der Betriebsstrategie und dem mindestens einen Riemendehnungssignal 19 ansteuert.

Beispielsweise kann es wie oben angedeutet vorgesehen sein, dass die Betriebsstrategie die von der Antriebsanordnung 7 erzeugte Antriebsleistung, hier und vorzugsweise deren Verteilung auf die Arbeitsorgane 3-6, betrifft, wobei die Maschinensteuerung 2 die von dem jeweiligen Arbeitsorgan 3-6 aufgenommene Antriebsleistung basierend auf dem jeweiligen Riemendehnungssignal 19 ermittelt.

Alternativ oder zusätzlich kann es vorgesehen sein, dass die Betriebsstrategie die Einstellung der Maschinenparameter der Antriebsanordnung 7 in Abhängigkeit von deren abgegebener Antriebsleistung betrifft und dass die Maschinensteuerung 2 die abgegebene Antriebsleistung basierend auf dem Riemendehnungssignal 19 ermittelt.

Wiederum alternativ oder zusätzlich kann es vorgesehen sein, dass die Betriebsstrategie die Einstellung der Maschinenparameter mindestens eines Arbeitsorgans 3-6 in Abhängigkeit von dessen aufgenommener Antriebsleistung betrifft, wobei die Maschinensteuerung 2 die aufgenommene Antriebsleistung basierend auf dem jeweiligen Riemendehnungssignal 19 ermittelt.

Es darf auch hinsichtlich der Erläuterung der obigen Betriebsstrategien darauf hingewiesen werden, dass diese Darstellung vereinfacht ist und das Auftreten mechanischer Verluste nicht berücksichtigt ist.

Wie oben angesprochen, lässt sich die vorschlagsgemäße Lösung besonders vorteilhaft bei einer Arbeitsmaschine 1 mit mehreren Riementrieben 9, 10 anwenden. Dann ist es so, dass die Maschinensteuerung 2 aus den Riemendehnungssignalen 19, 22 und den dazugehörigen Kennwertsätzen die Verteilung der Antriebsleistung der Antriebsanordnung 7 auf riemengetriebene Arbeitsorgane 3-6 oder auf Gruppen von riemengetriebenen Arbeitsorganen 3-6 ermittelt. Dabei kann die Ermittlung der weiter oben angesprochenen, theoretischen Vergleichswerte ausreichend sein, da beispielsweise eine prozentuale Verteilung der Antriebsleistung auf die jeweiligen Arbeitsorgane 3-6 bereits eine hinreichende Grundlage für die Ansteuerung und/oder Überwachung der Arbeitsmaschine 1 sein kann.

Hinsichtlich der Überwachung der Arbeitsmaschine 1 kann es vorteilhaft sein, dass der Kennwertsatz eine Information über den Einfluss des Riemenverschleißes auf das Dehnungsverhalten des Antriebsriemens 14 umfasst, wobei die Maschinensteuerung 2 basierend auf dem Riemendehnungssignal 19 und dem Kennwertsatz eine Verschleißinformation zum Verschleiß des Antriebsriemens 14 des betreffenden Riementriebs 9 erzeugt. In besonders bevorzugter Ausgestaltung wird diese Verschleißinformation über die in Fig. 1 angedeutete Mensch-Maschine-Schnittstelle 23 ausgegeben, so dass der Bediener die Ansteuerung der Arbeitsmaschine 1 auf die Verschleißsituation anpassen kann.

Grundsätzlich ist für einen Antriebsriemen 14 ein nomineller Lebenszyklus mit mindestens zwei Lebenszyklusphasen vorgesehen, zu denen jedenfalls eine Einlaufphase und eine sich daran anschließende Betriebsphase gehört. Vorzugsweise umfasst der Kennwertsatz eine Information über das Dehnungsverhalten des Antriebsriemens 14 in den verschiedenen Lebenszyklusphasen, wobei die Maschinensteuerung 2 die Ansteuerung bzw. Überwachung der Arbeitsmaschine 1 in Abhängigkeit von der jeweils aktuellen Lebenszyklusphase und von dem jeweiligen Kennwertsatz vornimmt. Entsprechend stellt sich die Maschinensteuerung 2 durch eine entsprechende Anpassung des Kennwertsatzes darauf ein, dass die Einlaufphase, die regelmäßig etwa 100 Betriebsstunden andauert, ein Nachspannen des Antriebsriemens 14 und einen entsprechenden Kalibriervorgang erfordert. Dies kann die Maschinensteuerung 2 dem Bediener über die Mensch-Maschine-Schnittstelle 23 rechtzeitig zur Kenntnis bringen, so dass die Maschinenstandzeit wie oben angedeutet, erhöht werden kann.

Eine einfache Variante für die Überwachung der Arbeitsmaschine 1 besteht darin, dass der Kennwertsatz einen Grenzdehnbereich für den Antriebsriemen 14 umfasst, wobei die Maschinensteuerung 2 bei Erreichen des Grenzdehnbereichs eine auf den betreffenden Riementrieb 9 gerichtete Grenzdehnroutine ablaufen lässt. Bei der Grenzdehnroutine handelt es sich vorzugsweise um ein Softwareprogramm, das in einer Rechenvorrichtung der Maschinensteuerung 2 abläuft. Der Grenzdehnbereich kann grundsätzlich fest vorgegeben sein. Denkbar ist aber auch, dass der Grenzdehnbereich in Abhängigkeit von der Lebenszyklusphase des Antriebsriemens 14 veränderlich ist.

Für die Umsetzung der obigen Grenzdehnroutine sind verschiedene vorteilhafte Varianten denkbar. Hier und vorzugsweise ist es so, dass die Maschinensteuerung 2 in der Grenzdehnroutine eine Wartungsmeldung, hier und vorzugsweise einen Hinweis auf die Notwendigkeit eines Nachspannens, über die Mensch-Maschine-Schnittstelle 23 ausgibt. Alternativ oder zusätzlich kann es vorgesehen sein, dass die Maschinensteuerung 2 in der Grenzdehnroutine die Antriebsanordnung 7 und/oder das mindestens eine Arbeitsorgan 3-6 mit begrenzter, insbesondere reduzierter, übertragener Antriebsleistung für den betreffenden Riementrieb 9 ansteuert.

Eine für den Bediener besonders komfortable Variante ergibt sich dadurch, dass die Maschinensteuerung 2 basierend auf dem Riemendehnungssignal 19 und dem Kennwertsatz eine Prognose über den Verschleiß des Antriebsriemens 17 erzeugt, die vorzugsweise über die Mensch-Maschine-Schnittstelle 23 ausgegeben wird. Eine solche Prognose lässt sich basierend auf den oben angesprochenen Informationen zu dem Lebenszyklus des Antriebsriemens 14 erzeugen. Dadurch ist es dem Bediener möglich, das Nachspannen des Antriebsriemens 14 sowie einen eventuell erforderlichen Wechsel des Antriebsriemens 14 frühzeitig zu planen, so dass sich die Maschinenstandzeit weiter erhöht.

Um zu vermeiden, dass ein unvorhergesehenes Reißen des Antriebsriemens 14 zu Schäden innerhalb der Arbeitsmaschine 1 führt, ist es vorzugsweise vorgesehen, dass der Kennwertsatz eine Maximaldehnung umfasst und dass die Maschinensteuerung 2 die Antriebsanordnung 7 bei Erreichen der Maximaldehnung abschaltet. Alternativ oder zusätzlich kann es vorgesehen sein, dass die Maschinensteuerung 2 die Antriebsanordnung 7 bei Erreichen einer Maximalauslenkung des Riemenspanners 17 abschaltet, so dass ein tatsächlich erfolgtes Reißen des Antriebsriemens 14 zu einem kurzfristigen Abschalten der Antriebsanordnung 7 führt. Der letztgenannte Fall betrifft insbesondere die Situation, in der der Antriebsriemen 14 von der Antriebsrolle 11 und/oder der Abtriebsrolle 12, 13 springt, was beispielsweise durch den Eintritt von Verunreinigungen in die Abrollbereiche der Antriebsrolle 11 bzw. der Abtriebsrollen 12, 13 stattfinden kann.

Schließlich darf noch darauf hingewiesen werden, dass aus dem Riemendehnungssignal 19 grundsätzlich auch eine plastische Dehnung des Antriebsriemens 14 erfasst werden kann. Sofern dies außerhalb der Einlaufphase erfolgt, ist je nach Auslegung des Antriebsriemens 14 damit zu rechnen, dass ein Reißen des Antriebsriemens 14 ansteht. Die Grenzen hierfür können wiederum von dem Kennwertsatz des betreffenden Antriebsriemens 14 umfasst sein und von der Maschinensteuerung 2 entsprechend ausgewertet werden.

Das dynamische Riemendehnungssignal 19 unterliegt aufgrund der Tatsache, dass es während des Arbeitsbetriebs aufgenommen wird, ständigen Schwankungen sowie einem gewissen Rauschen. Entsprechend ist es vorzugsweise so, dass das Riemendehnungssignal 19 einer Filterung, insbesondere einer dynamischen Mittelwertbildung, unterzogen wird, bevor es von der Maschinensteuerung 2, wie oben erläutert, ausgewertet wird.

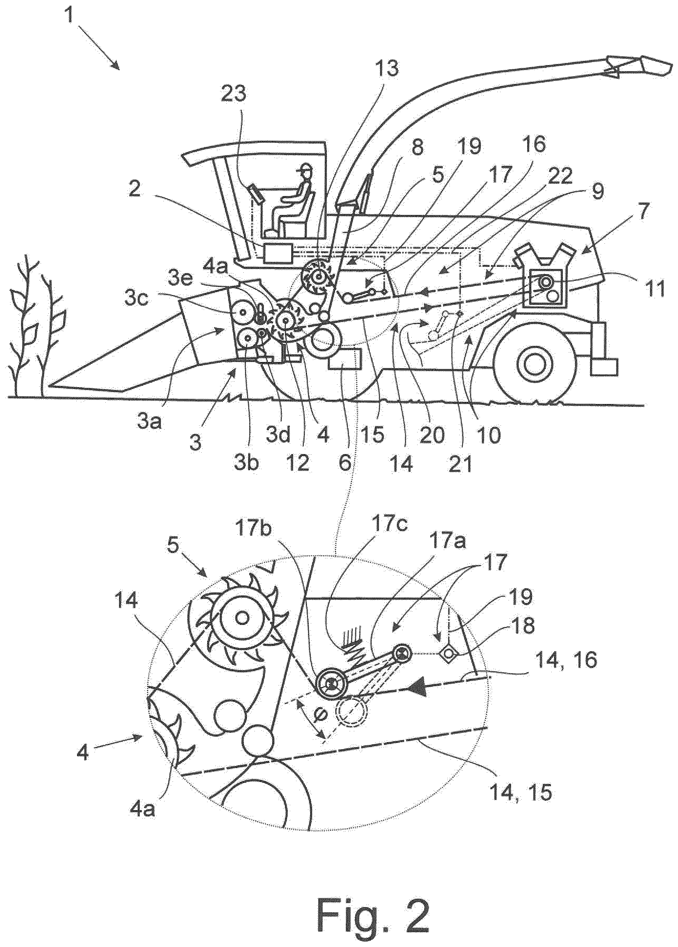

Die Darstellung gemäß Fig. 2 zeigt eine vorschlagsgemäße Arbeitsmaschine 1 in einer weiteren Ausführungsform, bei der eine besonders bevorzugte Auslegungsvariante für den Riemenspanner 17 vorgesehen ist. Alle Ausführungen zu der in Fig. 1 gezeigten Arbeitsmaschine 1 gelten für die in Fig. 2 gezeigte Arbeitsmaschine 1 entsprechend.

Der Riemenspanner 17 der in Fig. 2 gezeigten Arbeitsmaschine 1 zeigt eine obige Auslenkkomponente, nämlich eine Schwinge 17a, die eine andere Ausrichtung als die in Fig. 1 gezeigte Schwinge 17a aufweist. Im Einzelnen schließt die längliche Schwinge 17a gemäß Fig. 2 mit einem Abschnitt des sich von der Spannrolle 17 erstreckenden Antriebsriemens 14, hier mit dem in Fig. 2 sich nach rechts erstreckenden Abschnitt, einen flachen Winkel ein. Damit lässt sich eine besonders gute Spannwirkung bei guter Reproduzierbarkeit der Me-ßergebnisse erreichen. Wie oben erläutert, gelten im Übrigen alle zu Fig. 1 gemachten Ausführung für Fig. 2 entsprechend.

### Bezugszeichenliste

- 1: Arbeitsmaschine
- 2: Maschinensteuerung
- 3: Vorpresseinheit
- 3a: Presskanal
- 3b: 1. Vorpresswalze vorne
- 3c: 2. Vorpresswalze vorne
- 3d: 1. Vorpresswalze hinten
- 3e: 2. Vorpresswalze hinten
- 4: Häckselwerk
- 4a: Messertrommel
- 5: Fördervorrichtung
- 6: Fahrantrieb
- 7: Antriebsanordnung
- 8: Auswurfkanal
- 9, 10: Riementrieb
- 11: Antriebsrolle
- 12, 13: Abtriebsrolle
- 14: Antriebsriemen
- 15: Zugtrum
- 16: Lostrum
- 17: 1. Riemenspanner
- 17a: Schwinge 1. Riemenspanner
- 17b: Spannrolle 1. Riemenspanner
- 17c: Federanordnung 1. Riemenspanner
- 18: Riemendehnungssensor 1. Riemenspanner
- 19: Riemendehnungssignal 1. Riemenspanner
- 20: 2. Riemenspanner
- 21: Riemendehnungssensor 2. Riemenspanner
- 22: Riemendehnungssignal 2. Riemenspanner
- 23: Mensch-Maschine-Schnittstelle

## Patentansprüche

1. Landwirtschaftliche Arbeitsmaschine mit einer Maschinensteuerung (2) zu ihrer Ansteuerung und/oder Überwachung, mit Arbeitsorganen (3-6) und einer Antriebsanordnung (7) für den Antrieb der Arbeitsorgane (3-6), wobei die Antriebsanordnung (7) über mindestens einen Riementrieb (9, 10) mit mindestens einem Arbeitsorgan (3-6) antriebstechnisch gekoppelt ist, wobei der Riementrieb (9, 10) eine Antriebsrolle (11), mindestens eine Abtriebsrolle (12, 13) und einen Antriebsriemen (14) aufweist, wobei der Riementrieb (9, 10) einen sich je nach Riemendehnung auslenkenden Riemenspanner (17, 20) mit einem Riemendehnungssensor (18, 21) aufweist, der eingerichtet ist, zur Erzeugung eines Riemendehnungssignals (19, 22) die Auslenkung des Riemenspanners (17, 20) zu ermitteln und die Maschinensteuerung (2) eingerichtet ist, die Arbeitsmaschine (1) während des Arbeitsbetriebs basierend auf dem Riemendehnungssignal (19, 22) und einem dem Riementrieb (9, 10) zugeordneten Kennwertsatz anzusteuern und/oder zu überwachen,
**dadurch gekennzeichnet, dass** der Kennwertsatz eine Information zum Dehnungsverhalten des betreffenden Antriebsriemens (14), zumindest ein E-Modul des betreffenden Antriebsriemens (14), umfasst, und, dass der Kennwertsatz einen Zusammenhang zwischen der Auslenkung des Riemenspanners (17, 20) und der über den Antriebsriemen (14) übertragenen Antriebskraft umfasst und die Maschinensteuerung (2) eingerichtet ist, in einem Kalibriervorgang den Kennwertsatz, insbesondere den Zusammenhang zwischen der Auslenkung des Riemenspanners (9, 10) und der übertragenen Antriebskraft und/oder der übertragenen Antriebsleistung, zu ermitteln oder anzupassen, wobei die Maschinensteuerung (2) eingerichtet ist die Arbeitsmaschine (1) im Rahmen des Kalibriervorgangs in einem vordefinierten Kalibrier-Lastzustand des mindestens einen Riementriebs (9, 10) zu betreiben und den Kennwertsatz aus dem im Kalibrier-Lastzustand ermittelten Riemendehnungssignal (19, 22) zu ermitteln oder an das im Kalibrier-Lastzustand ermittelte Riemendehnungssignal (19, 22) anzupassen, wobei der Kalibrier-Lastzustand dadurch definiert ist, dass mindestens ein im Leerlauf befindliches Arbeitsorgan (3-6) bei vorbestimmter Drehzahl und/oder Antriebsleistung der Antriebsanordnung (7) angetrieben wird.

2. Landwirtschaftliche Arbeitsmaschine nach Anspruch 1, **dadurch gekennzeichnet, dass** die Antriebsanordnung (7) über mindestens zwei Riementriebe (9, 10) mit Arbeitsorganen (3-6) antriebstechnisch gekoppelt ist, und dass die Riementriebe (9, 10) jeweils einen je nach Riemendehnung auslenkbaren Riemenspanner (17, 20) und einen Riemendehnungssensor (18, 21) wobei dieser eingerichtet ist, zur Erzeugung eines Riemendehnungssignals (19, 22) die Auslenkung des jeweiligen Riemenspanners (17, 20) zu ermitteln und dass die Maschinensteuerung (2) eingerichtet ist die Arbeitsmaschine (1) basierend auf den Riemendehnungssignalen (19, 22) und den Riementrieben (9, 10) jeweils zugeordneten Kennwertsätzen anzusteuern und/oder zu überwachen.

3. Landwirtschaftliche Arbeitsmaschine nach einem der vorhergehenden Ansprüche, **dadurch gekennzeichnet, dass** der Riemendehnungssensor (18, 21) als Wegsensor, insbesondere als Winkelsensor, ausgestaltet ist, der einer Auslenkkomponente, vorzugsweise einer Schwinge (17a), des Riemenspanners (17) zugeordnet ist.

4. Landwirtschaftliche Arbeitsmaschine nach einem der vorhergehenden Ansprüche, **dadurch gekennzeichnet, dass** die Maschinensteuerung (2) eingerichtet ist aus dem Riemendehnungssignal (19, 22) und dem Kennwertsatz die übertragene Antriebskraft zu ermitteln, und/oder, dass die Maschinensteuerung (2) eingerichtet ist aus dem Riemendehnungssignal (19, 22) und der Riemengeschwindigkeit, insbesondere der Drehzahl und der Geometrie der Antriebsrolle (11) des Riementriebs (9, 10), die jeweils übertragene Antriebsleistung zu ermitteln.

5. Landwirtschaftliche Arbeitsmaschine nach einem der vorhergehenden Ansprüche, **dadurch gekennzeichnet, dass** in der Maschinensteuerung (2) eingerichtet ist mindestens eine auswählbare Betriebsstrategie gespeichert ist und dass die Maschinensteuerung (2) die Arbeitsmaschine (1), insbesondere die Antriebsanordnung (7) und/oder mindestens ein Arbeitsorgan (3-6), basierend auf der Betriebsstrategie und dem Riemendehnungssignal (19, 22) anzusteuern.

6. Landwirtschaftliche Arbeitsmaschine nach Anspruch 2 und ggf. nach einem der Ansprüche 3 bis 5, **dadurch gekennzeichnet, dass** die Maschinensteuerung (2) eingerichtet ist aus den Riemendehnungssignalen (19, 22) und den dazugehörigen Kennwertsätzen die Verteilung der Antriebsleistung der Antriebsanordnung (7) auf riemengetriebene Arbeitsorgane (3-6) oder auf Gruppen von riemengetriebenen Arbeitsorganen (3-6) zu ermitteln.

7. Landwirtschaftliche Arbeitsmaschine nach einem der vorhergehenden Ansprüche, **dadurch gekennzeichnet, dass** der Kennwertsatz eine Information über den Einfluß des Riemenverschleißes auf das Dehnungsverhalten des Antriebsriemens (14) umfasst und dass die Maschinensteuerung (2) basierend auf dem Riemendehnungssignal (19, 22) und dem Kennwertsatz eine Verschleißinformation zum Verschleiß des Antriebsriemens (14) des betreffenden Riementriebs (9, 10) erzeugt und, vorzugsweise, über eine Mensch-Maschine-Schnittstelle (23) ausgibt.

8. Landwirtschaftliche Arbeitsmaschine nach einem der vorhergehenden Ansprüche, **dadurch gekennzeichnet, dass** der Kennwertsatz einen Grenzdehnbereich umfasst und dass die Maschinensteuerung (2) eingerichtet ist bei Erreichen des Grenzdehnbereichs eine auf den betreffenden Riementrieb (9, 10) gerichtete Grenzdehnroutine ablaufen zu lassen.

9. Landwirtschaftliche Arbeitsmaschine nach Anspruch 8, **dadurch gekennzeichnet, dass** die Maschinensteuerung (2) in der Grenzdehnroutine eine Wartungsmeldung, insbesondere einen Hinweis auf die Notwendigkeit eines Nachspannens, über eine Mensch-Maschine-Schnittstelle (23) ausgibt, und/oder, dass die Maschinensteuerung (2) eingerichtet ist in der Grenzdehnroutine die Antriebsanordnung (7) und/oder das mindestens eine Arbeitsorgan (3-6) mit begrenzter, insbesondere reduzierter, übertragener Antriebsleistung für den betreffenden Riementrieb (9, 10) anzusteuern.

10. Landwirtschaftliche Arbeitsmaschine nach einem der vorhergehenden Ansprüche, **dadurch gekennzeichnet, dass** die Maschinensteuerung (2) basierend auf dem Riemendehnungssignal (19, 22) und dem Kennwertsatz eine Prognose über den Verschleiß des Antriebsriemens (14) erzeugt und, vorzugsweise, über eine Mensch-Maschine-Schnittstelle (23) ausgibt.

11. Landwirtschaftliche Arbeitsmaschine nach einem der vorhergehenden Ansprüche, **dadurch gekennzeichnet, dass** der Kennwertsatz eine Maximaldehnung umfasst und dass die Maschinensteuerung (2) die Antriebsanordnung (7) bei Erreichen der Maximaldehnung abschaltet, und/oder, dass die Maschinensteuerung (2) die Antriebsanordnung (7) bei Erreichen einer Maximalauslenkung des Riemenspanners (17, 20) abschaltet

## Claims

1. An agricultural working machine comprising a machine control means (2) for actuation and/or monitoring thereof, comprising working member (3-6) and a drive arrangement (7) for driving the working members (3-6), wherein the drive arrangement (7) is drivingly coupled by way of at least one belt drive (9, 10) to at least one working member (3-6), wherein the belt drive (9, 10) has a drive pulley (11), at least one driven pulley (12, 13) and a drive belt (14), wherein the belt drive (9, 10) has a belt tensioner (17, 20) which deflects in dependence on the respective belt stretch and comprising a belt stretch sensor (18, 21) adapted to ascertain the deflection of the belt tensioner (17, 20) to generate a belt stretch signal (19, 22) and the machine control means (2) is adapted to actuate and/or monitor the working machine (1) during the working mode based on the belt stretch signal (19, 20) and a set of characteristic values associated with the belt drive (9, 10),
**characterised in that** the set of characteristic values includes information relating to the stretch behaviour of the belt drive (14) in question, at least a modulus of elasticity of the belt drive (14) in question, and the set of characteristic values includes a relationship between the deflection of the belt tensioner (17, 20) and the drive force transmitted by way of the drive belt (14), and the machine control means (2) is adapted in a calibration operation to ascertain or adapt the set of characteristic values, in particular the relationship between the deflection of the belt tensioner (9, 10) and the transmitted drive force and/or the transmitted drive power, wherein the machine control means (2) is adapted to operate the working machine (1) in the course of the calibration operation in a predefined calibration load state of the at least one belt drive (9, 10) and to ascertain the set of characteristic values from the belt stretch signal (19, 22) ascertained in the calibration load state or to adapt same to the belt stretch signal (19, 22) ascertained in the calibration load state, wherein the calibration load state is defined by at least one working member (3-6) which is in the idle state being driven at a predetermined rotary speed and/or drive power of the drive arrangement (7).

2. An agricultural working machine according to claim 1 **characterised in that** the drive arrangement (7) is drivingly coupled to working members (3-6) by way of at least two belt drives (9, 10) and the belt drives (9, 10) have a respective belt tensioner (17, 20) which can be deflected in dependence on the respective belt stretch and a belt stretch sensor (18, 21), wherein same is adapted to ascertain the deflection of the respective belt tensioner (17, 20) to generate a belt stretch signal (19, 22) and the machine control means (2) is adapted to actuate and/or monitor the working machine (1) based on the belt stretch signals (19, 22) and sets of characteristic values respectively associated with the belt drives (9, 10).

3. An agricultural working machine according to one of the preceding claims **characterised in that** the belt stretch sensor (18, 20) is in the form of a displacement sensor, in particular an angle sensor, which is associated with a deflection component, preferably a swing arm (17a), of the belt tensioner (17).

4. An agricultural working machine according to one of the preceding claims **characterised in that** the machine control means (2) is adapted to ascertain the transmitted drive force from the belt stretch signal (19, 22) and the set of characteristic values and/or the machine control means (2) is adapted to ascertain the respectively transmitted drive power from the belt stretch signal (19, 22) and the belt speed, in particular the rotary speed and the geometry of the drive pulley (11) of the belt drive (9, 10).

5. An agricultural working machine according to one of the preceding claims **characterised in that** at least one selectable operating strategy is adapted to be stored in the machine control means (2) and the machine control means (2) is adapted to control the working machine (1), in particular the drive arrangement (7) and/or at least one working member (3-6) based on the operating strategy and the belt stretch signal (19, 22).

6. An agricultural working machine according to claim 2 and optionally according to one of claims 3 to 5 **characterised in that** the machine control means (2) is adapted to ascertain from the belt stretch signals (19, 22) and the associated sets of characteristic values the distribution of the drive power of the drive arrangement (7) to belt-driven working members (3-6) or groups of belt-driven working members (3-6).

7. An agricultural working machine according to one of the preceding claims **characterised in that** the set of characteristic values includes information about the influence of belt wear on the stretch behaviour of the drive belt (14) and the machine control means (2) based on the belt stretch signal (19, 22) and the set of characteristic values generates wear information relating to the wear of the drive belt (14) of the belt drive (9, 10) in question and preferably outputs same by way of a man-machine interface (23).

8. An agricultural working machine according to one of the preceding claims **characterised in that** the set of characteristic values includes a limit stretch range and the machine control means (2) is adapted to cause a limit stretch routine directed to the belt drive (9, 10) in question to run when the limit stretch range is reached.

9. An agricultural working machine according to claim 8 **characterised in that** in the belt stretch routine the machine control means (2) outputs a maintenance message, in particular an indication of the need for re-tensioning, by way of a man-machine interface (23), and/or the machine control means (2) is adapted in the limit stretch routine to actuate the drive arrangement (7) and/or the at least one working member (3-6) at limited, in particular reduced, transmitted drive power for the belt drive (9, 10) in question.

10. An agricultural working machine according to one of the preceding claims **characterised in that** the machine control means (2) generates a prognosis about the wear of the drive belt (14) based on the belt stretch signal (19, 22) and the set of characteristic values and preferably outputs same by way of a man-machine interface (23).

11. An agricultural working machine according to one of the preceding claims **characterised in that** the set of characteristic values includes a maximum stretch and the machine control means (2) shuts down the drive arrangement (7) when the maximum stretch is reached and/or the machine control means shuts down the drive arrangement (7) when a maximum deflection of the belt tensioner (17, 20) is reached.

## Revendications

1. Engin agricole comprenant une commande d'engin (2) pour la commande et/ou la surveillance de celle-ci, comprenant des organes de travail (3-6) et un agencement d'entraînement (7) pour l'entraînement des organes de travail (3-6), l'agencement d'entraînement (7) étant couplé en entraînement à au moins un organe de travail (3-6) par l'intermédiaire d'au moins un entraînement à courroie (9, 10), l'entraînement à courroie (9, 10) comportant une poulie menante (11), au moins une poulie menée (12, 13) et une courroie d'entraînement (14), l'entraînement à courroie (9, 10) comportant un tendeur de courroie (17, 20) déviable en fonction de l'allongement de la courroie et muni d'un capteur d'allongement de courroie (18, 21), lequel est agencé pour déterminer la déviation du tendeur de courroie (17, 20) afin de générer un signal d'allongement de courroie (19, 22), et la commande d'engin (2) étant agencée pour commander et/ou surveiller l'engin (1) pendant le fonctionnement de travail sur la base du signal d'allongement de courroie (19, 22) et d'un ensemble de valeurs caractéristiques associé à l'entraînement à courroie (9, 10), **caractérisé en ce que** l'ensemble de valeurs caractéristiques comprend une information sur le comportement d'allongement de la courroie d'entraînement correspondante (14), au moins un module d'élasticité de la courroie d'entraînement concernée (14), et **en ce que** l'ensemble de valeurs caractéristiques comprend un rapport entre la déviation du tendeur de courroie (17, 20) et la force d'entraînement transmise par l'intermédiaire de la courroie d'entraînement (14), et la commande d'engin (2) étant agencée pour déterminer ou adapter, lors d'une opération de calibrage, l'ensemble de valeurs caractéristiques, en particulier le rapport entre la déviation du tendeur de courroie (9, 10) et la force d'entraînement transmise et/ou la puissance d'entraînement transmise, la commande d'engin (2) étant agencée pour faire fonctionner l'engin (1), dans le cadre de l'opération de calibrage, dans un état de charge de calibrage prédéfini du au moins un entraînement à courroie (9, 10) et pour déterminer l'ensemble de valeurs caractéristiques à partir du signal d'allongement de courroie (19, 22) déterminé à l'état de charge de calibrage ou pour l'adapter au signal d'allongement de courroie (19, 22) déterminé à l'état de charge de calibrage, l'état de charge de calibrage étant défini **en ce qu'**au moins un organe de travail (3-6) se trouvant en marche à vide est entraîné à une vitesse de rotation et/ou une puissance d'entraînement prédéterminées de l'agencement d'entraînement (7).

2. Engin agricole selon la revendication 1, **caractérisé en ce que** l'agencement d'entraînement (7) est couplé en entraînement à des organes de travail (3-6) par l'intermédiaire d'au moins deux entraînements à courroie (9, 10), et **en ce que** les entraînements à courroie (9, 10) comportent chacun un tendeur de courroie (17, 20) déviable selon l'allongement de la courroie et un capteur d'allongement de courroie (18, 21), lequel est agencé pour déterminer la déviation du tendeur de courroie correspondant (17, 20) afin de générer un signal d'allongement de courroie (19, 22), et **en ce que** la commande d'engin (2) est agencée pour commander et/ou surveiller l'engin (1) sur la base des signaux d'allongement de courroie (19, 22) et d'ensembles de valeurs caractéristiques respectivement associés aux entraînements à courroie (9, 10).

3. Engin agricole selon une des revendications précédentes, **caractérisé en ce que** le capteur d'allongement de courroie (18, 21) est conformé en capteur de course, en particulier en capteur d'angle, qui est associé à une composante de déviation, de préférence à un balancier (17a), du tendeur de courroie (17).

4. Engin agricole selon une des revendications précédentes, **caractérisé en ce que** la commande d'engin (2) est agencée pour déterminer la force d'entraînement transmise à partir du signal d'allongement de courroie (19, 22) et de l'ensemble de valeurs caractéristiques, et/ou **en ce que** la commande d'engin (2) est agencée pour déterminer la puissance d'entraînement transmise à partir du signal d'allongement de courroie (19, 22) et de la vitesse de courroie, en particulier de la vitesse de rotation et de la géométrie de la poulie menante (11) de l'entraînement à courroie (9, 10).

5. Engin agricole selon une des revendications précédentes, **caractérisé en ce que** dans la commande d'engin (2) est stockée au moins une stratégie de fonctionnement sélectionnable, et **en ce que** la commande d'engin (2) commande l'engin (1), en particulier l'agencement d'entraînement (7) et/ou au moins un organe de travail (3-6), sur la base de la stratégie de fonctionnement et du signal d'allongement de courroie (19, 22).

6. Engin agricole selon la revendication 2 et, le cas échéant, selon une des revendications 3 à 5, **caractérisé en ce que** la commande d'engin (2) est agencée pour déterminer la répartition de la puissance d'entraînement de l'agencement d'entraînement (7) à des organes de travail (3-6) entraînés par courroie ou à des groupes d'organes de travail (3-6) entraînés par courroie à partir des signaux d'allongement de courroie (19, 22) et des ensembles de valeurs caractéristiques correspondantes.

7. Engin agricole selon une des revendications précédentes, **caractérisé en ce que** l'ensemble de valeurs caractéristiques comprend une information sur l'influence de l'usure de courroie sur le comportement d'allongement de la courroie d'entraînement (14), et **en ce que**, sur la base du signal d'allongement de courroie (19, 22) et de l'ensemble de valeurs caractéristiques, la commande d'engin (2) produit une information d'usure sur l'usure de la courroie d'entraînement (14) de l'entraînement à courroie correspondant (9, 10) et, de préférence, l'édite par l'intermédiaire d'une interface homme-machine (23).

8. Engin agricole selon une des revendications précédentes, **caractérisé en ce que** l'ensemble de valeurs caractéristiques englobe une plage d'allongement limite, et **en ce que** la commande d'engin (2) est agencée pour provoquer, en cas d'atteinte de la plage d'allongement limite, l'exécution d'une séquence d'allongement limite dirigée vers l'entraînement à courroie correspondant (9, 10).

9. Engin agricole selon la revendication 8, **caractérisé en ce que**, lors de la séquence d'allongement limite, la commande d'engin (2) délivre un message de maintenance, en particulier signale un besoin de corriger la tension, par l'intermédiaire d'une interface homme-machine (23), et/ou, **en ce que** la commande d'engin (2) est agencée pour, lors de la séquence d'allongement limite, commander l'agencement d'entraînement (7) et/ou le au moins un organe de travail (3-6) avec une puissance d'entraînement transmise limitée, en particulier réduite, pour l'entraînement à courroie correspondant (9, 10).

10. Engin agricole selon une des revendications précédentes, **caractérisé en ce que**, sur la base du signal d'allongement de courroie (19, 22) et de l'ensemble de valeurs caractéristiques, la commande d'engin (2) génère un pronostic sur l'usure de la courroie d'entraînement (14) et, de préférence, le délivre par l'intermédiaire d'une interface homme-machine (23).

11. Engin agricole selon une des revendications précédentes, **caractérisé en ce que** l'ensemble de valeurs caractéristiques englobe un allongement maximal et **en ce que**, à l'atteinte de l'allongement maximal, la commande d'engin (2) coupe l'agencement d'entraînement (7), et/ou, **en ce que** la commande d'engin (2) coupe l'agencement d'entraînement (7) à l'atteinte d'une déviation maximale du tendeur de
